Europäisches Patentamt

European Patent Office

Office européen des brevets

(11) Veröffentlichungsnummer: **0 241 684**
**A2**

# (12) EUROPÄISCHE PATENTANMELDUNG

(21) Anmeldenummer: **87102821.3**

(22) Anmeldetag: **27.02.87**

(51) Int. Cl.4: **G02B 7/00**

(30) Priorität: **14.03.86 DE 3608484**

(43) Veröffentlichungstag der Anmeldung:
**21.10.87 Patentblatt 87/43**

(84) Benannte Vertragsstaaten:
**CH DE FR GB LI NL**

(71) Anmelder: **Firma Carl Zeiss**

**D-7920 Heidenheim (Brenz)(DE)**

(84) **CH DE FR LI NL**

(71) Anmelder: **CARL-ZEISS-STIFTUNG trading as CARL ZEISS**

**D-7920 Heidenheim (Brenz)(DE)**

(84) **GB**

(72) Erfinder: **Blumentritt, Martin**
**Langweidstrasse 23**
**D-7923 Königsbronn(DE)**
Erfinder: **Gerlinger, Hermann, Dr.**
**Köhlersrasse 25**
**D-7080 Aalen-Ebnat(DE)**
Erfinder: **Schneider, Horst**
**Amselweg 8**
**D-7923 Königsbronn(DE)**
Erfinder: **Glück, Franz**
**Eichweg 27**
**D-7080 Aalen(DE)**

(54) **Verfahren und Anordnung zur justierten Montage optischer Bauteile.**

(57) Für eine dauerhafte und beständige Fixierung von justierten optischen Bauteilen durch eine sich verfestigende Substanz wird die Fixierung auf mindestens zwei voneinander unabhängige Fixierungen (22, 24; 35, 37; 43, 45, 47; 52, 54, 56, 64, 66) aufgeteilt, wobei die für die Fixierungen verwendeten Teile (23, 31, 36, 44, 46, 53, 55, 65) derart ausgebildet und dimensioniert sind, daß sich für die verfestigende Substanz optimale Volumina bzw. Schichtdicken ergeben.

Fig.2

## Verfahren und Anordnungen zur justierten Montage optischer Bauteile

Die vorliegende Erfindung betrifft ein Verfahren und Anordnungen zur justierten Montage eines optischen Bauteiles entsprechend dem Oberbegriff des Anspruches 1.

Aus der EP-A1-0 090 218 ist ein Verfahren und eine Vorrichtung zum Justieren und Montieren von optischen Bauteilen in optischen Geräten bekannt. Dabei ist das optische Bauteil während des Justiervorganges mit dem Gerät nur mit einer nicht zum Gerät gehörenden Justiervorrichtung verbunden. Nach dem Justiervorgang wird das optische Bauteil oder seine Fassung mit dem Gerät durch eine flüssige oder pastenförmige Substanz verbunden, welche sich mit geringer Volumenänderung verfestigt. Das optische Bauteil oder seine Fassung und das Gerät sind hierfür derart ausgebildet, daß zwischen ihnen eine form-, kraft-oder haftschlüssige feste Verbindung entsteht. Nach der dauerhaften Fixierung des optischen Bauteiles wird die Justiervorrichtung entfernt.

Damit das optische Bauteil für den Justiervorgang ausreichend beweglich ist, müssen zwischen ihm bzw. seiner Fassung und dem Gerät genügend große Abstände auch dort sein, wo die Verbindung mit der sich verfestigenden Substanz erfolgt. Die dadurch bedingten relativ großen Volumina bzw. Schichtdicken führen dazu, daß beim Verfestigungsvorgang bereits wieder geringe Dejustierungen eintreten können und daß im fixierten Zustand infolge der nicht exakt gleichen thermischen Ausdehnungskoeffizienten durch thermische Einflüsse geringe Dejustierungen entstehen können. Das bekannte Verfahren hat daher den Nachteil, daß es sehr hohen Anforderungen an Justiergenauigkeit und Langzeitstabilität nicht mit ausreichender Zuverlässigkeit entspricht.

Der vorliegenden Erfindung liegt daher die Aufgabe zugrunde, das bekannte Verfahren so zu verbessern, daß trotz großer Bewegungsfreiheit bei der Justierung selbst extrem hohe Anforderungen an die Justiergenauigkeit und Langzeitstabilität erreicht werden.

Die gestellte Aufgabe wird erfindungsgemäß dadurch gelöst, daß die Fixierung durch die sich verfestigende Substanz auf mindestens zwei voneinander unabhängige Fixierungen aufgeteilt wird und daß die für die Fixierungen verwendeten Teile derart ausgebildet und dimensioniert werden, daß sich für die verfestigende Substanz optimale Werte für die Volumina bzw. Schichtdicken ergeben. Optimale Werte resultieren aus den Tatsachen, daß bei sehr geringen Volumina bzw. Schichtdicken keine ausreichend festen Verbindungen entstehen und daß bei großen Volumina bzw. Schichtdicken die zeitliche und thermische Stabilität nicht ausreichend zuverlässig ist. Die Aufteilung der Fixierung auf mehrere voneinander unabhängige Fixierungen kann den unterschiedlichen Translations-und Rotationsbewegungen bei der Justierung entsprechen. Das muß jedoch nicht der Fall sein, da die Koordinatenrichtungen für Justierung und Fixierung weitgehend unabhängig voneinander sind.

In einer vorteilhaften Ausführungsform ist ein optisches Bauteil, welches entweder selbst oder dessen Fassung bzw. Trägerplatte einen runden Querschnitt hat, in einem zylinderförmigen Ausschnitt einer Montageplatte mit einer Fuge für die sich verfestigende Substanz angeordnet und die Montageplatte ist auf einer Auflagefläche mit einer dünnen Zwischenschicht aus der sich verfestigenden Substanz angeordnet. Durch die Verschiebung der Montageplatte auf der Auflagefläche können große Abweichungen in zwei zueinander senkrechten Richtungen ausgeglichen werden, ohne daß die optimale Schichtdicke für die sich verfestigende Substanz verändert wird. Durch die Anordnung des optischen Bauelementes, welches selbst oder dessen Fassung bzw. Trägerplatte einen kreisförmigen Querschnitt hat, in dem zylinderförmigen Ausschnitt der Montageplatte können Abweichun gen in der dritten Richtung ausgeglichen werden. Außerdem ist eine Drehung um alle drei Raumrichtungen möglich.

In einer besonders vorteilhaften Ausgestaltung dieser Ausführungsform wird das optische Bauteil oder seine Fassung bzw. Trägerplatte an seiner äußeren Umrandung mit einer kugelförmigen Oberfläche ausgebildet, deren Radius gleich dem Radius des zylinderförmigen Ausschnittes in der Montageplatte vermindert um die Dicke der Fuge für die sich verfestigende Substanz gewählt wird und deren Mittelpunkt in der Mitte des optischen Bauteiles oder seiner Fassung bzw. Trägerplatte liegt. Dadurch wird erreicht, daß der Querschnitt der Fuge unabhängig von den Drehungen auch um diejenigen beiden Raumrichtungen wird, in denen die Montageplatte verschiebbar ist. Wenn keine Verschiebung in der zur Montageplatte senkrechten Richtung notwendig ist (weil diese durch die Bewegung von anderen optischen Elementen übernommen werden kann), dann kann der Ausschnitt in der Montageplatte und die äußere Umrandung des optischen Bauteiles oder seiner Fassung bzw. Trägerplatte kugelschalenförmig ausgebildet werden, wodurch eine Drehung um alle drei Raumrichtungen bei einem gleichmäßigen und gleichbleibenden Querschnitt der Fuge für die sich verfestigende Substanz möglich ist.

In einer anderen vorteilhaften Ausführungsform der Erfindung ist ein optisches Bauteil, welches entweder selbst oder dessen Fassung bzw. Trägerplatte zwei vorzugsweise parallel zueinander angeordnete Montageflächen hat, zwischen zwei Montagequadern mit dünnen Zwischenschichten aus der sich verfestigenden Substanz angeordnet und die Montagequader sind mit dünnen Zwischenschichten aus der sich verfestigendn Substanz auf einer Auflage angeordnet. Mit einer derartigen Anordnung ist eine Verschiebung in allen drei Raumrichtungen und ine Drehung um zwei Raumrichtungen möglich.

Eine Verschiebung und Drehung um alle drei Raumrichtungen ist mit einer weiteren Ausfuhrungsform möglich, be der ein optisches Bauteil, welches entweder selbst oder dessen Fassung bzw. Trägerplatte zwei vorzugsweise parallel zueinander angeordnete Montageflächen hat, zwischen zwei ersten Montagequadern mit dünnen Zwischenschichten aus der sich verfestigenden Substanz angeordnet ist, bei der die Stirnflächen der ersten Montagequader zwischen zwei zweiten Montagequadern mit dünnen Zwischenschichten aus der sich verfestigenden Substanz angeordnet sind und bei der die zweiten Montagequader auf einer Auflagefläche bzw. einem Chassis mit dünnen Zwischenschichten aus der sich verfestigenden Substanz angeordnet sind.

In einer weiteren vorteilhaften Ausführungsform der Erfindung ist ein optisches Bauteil, welches entweder selbst oder dessen Fassung bzw. Trägerplatte eine rückseitige Montagefläche hat, auf einer ersten quaderförmigen Montageplatte mit einer dünnen Zwischenschicht aus der sich verfestigenden Substanz angeordnet; die erste Montageplatte ist mit einer Seitenfläche auf einer zweiten quaderförmigen Montageplatte mit einer dünnen Zwischenschicht aus der sich verfestigenden Substanz angeordnet und die zweite Montageplatte ist mit einer Seitenfläche auf einer Grundplatte oder einem Chassis mit einer dünnen Zwischenschicht aus der sich verfestigenden Substanz angeordnet. In diesem Fall können beliebig große Abweichungen in allen drei Raumrichtungen und Drehungen um alle drei Raumrichtungen ausgeglichen werden bei Einhaltung der optimalen Schichtdicke für die sich verfestigende Substanz.

Wenn auf die Drehung um eine Raumrichtung verzichtet werden kann und das optische Bauteil eine seitliche Montagefläche hat, wie das z.B. bei Planspiegeln der Fall ist, dann reicht es, wenn die seitliche Montagefläche auf einer quaderförmigen Montageplatte mit einer dünnen Zwischenschicht aus der sich verfestigenden Substanz angeordnet ist und wenn die Montageplatte mit einer Seitenfläche auf einer Grundplatte bzw. einem Chassis mit einer dünnen Zwischenschicht aus der sich verfestigenden Substanz angeordnet ist.

Bei allen Ausführungsformen ist es besonders vorteilhaft, als Material für Fassungen, Trägerplatten, Montagequader, Montageplatten und/oder Auflageflächen bzw. Chassis verdichtete Keramik zu verwenden, deren Zusammensetzung so gewählt ist, daß ihr thermischer Ausdehnungskoeffizient gleich oder annähernd gleich demjenigen des Glases ist, aus dem die optischen Bauteile hergestellt sind.

Weitere vorteilhafte Ausgestaltungen der Erfindung gehen aus den abhängigen Ansprüchen hervor.

Die Erfindung wird im folgenden anhand von in den Figuren 1 bis 6 dargestellten Ausführungsbeispielen näher erläutert. Dabei zeigen:

Fig. 1 den Aufbau eines Spektrometers als Beispiel für ein optisches Gerät, bei dem sich die Erfindung vorteilhaft anwenden läßt;

Fig. 2 eine Anordnung für die Befestigung eines optischen Bauteiles mit rundem Querschnitt;

Fig. 3 eine Anordnung für die Befestigung einer Trägerplatte fur ein optisches Bauteil;

Fig. 4 eine weitere Anordnung für die Befestigung eines optischen Bauteiles an einem Chassis;

Fig. 5 eine Anordnung fur die Befestigung eines optischen Bauteiles mit rückseitiger Montagefläche und

Fig. 6 eine Anordnung für die Befestigung eines optischen Bauteiles mit seitlicher Montagefläche.

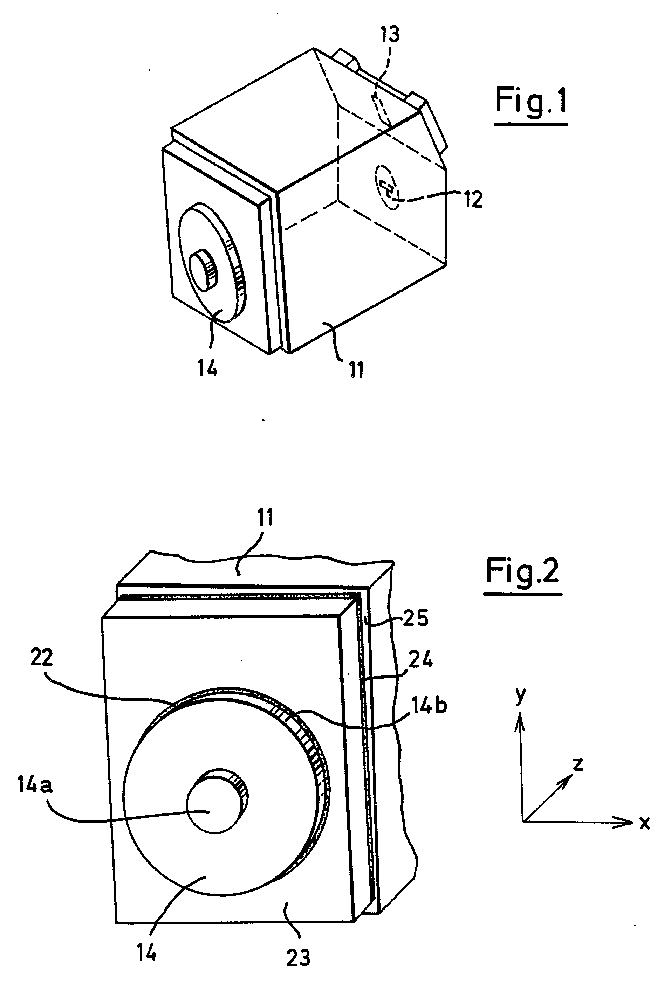

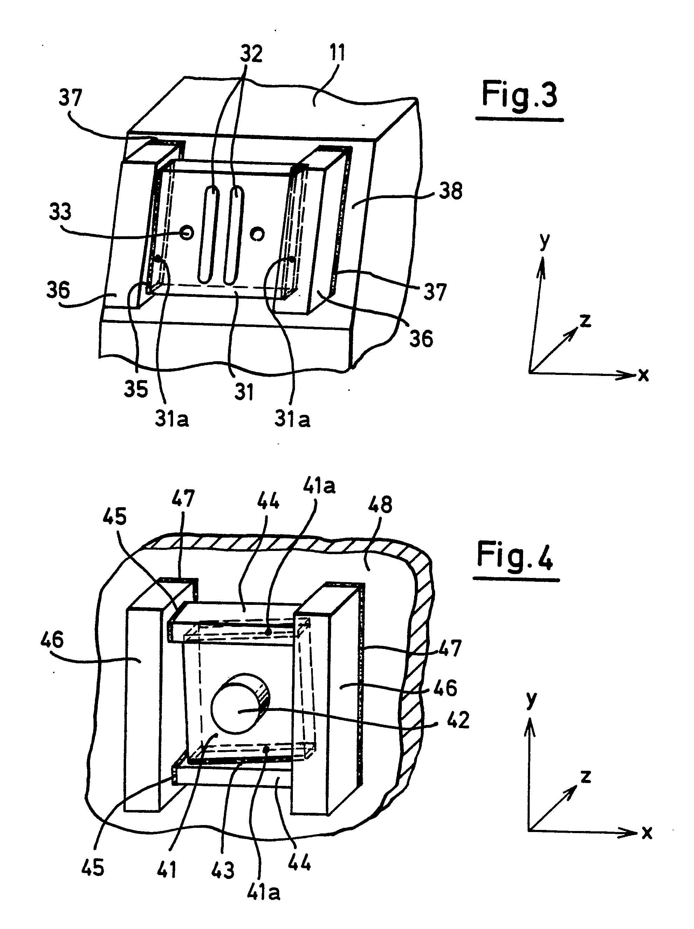

In Figur 1 ist ein Diodenzeilenspektrometer dargestellt, das aus Chassis (11), Spalt (12), Konkavgitter (14) und Diodenzeile (13) besteht. Spalt, Konkavgitter und Diodenzeile müssen genau zueinander justiert und dauerhaft fest fixiert sein. Die Justage und Montage des (übertrieben groß gezeichneten) Spaltes (12) erfolgt in bekannter Weise, indem der z.B. in eine Metallplatte eingeätzte Spalt unter Beobachtung mit einem Meßmikroskop z.B. zur Grundfläche des Chassis (11) justiert und in eine Vertiefung des Chassis geklebt wird. Das Konkavgitter (14) und die Diodenzeile (13) sind zunächst nur über Manipulatoren mit dem Chassis (11) verbunden und werden mit diesen Manipulatoren genau justiert, wie das aus der EP-A1-0 090 218 bekannt ist. Die Fixierung von Konkavgitter (14) und Diodenzeile (13) erfolgt dann mit den in den Figuren 2 und 3 dargestellten Anordnungen.

In Figur 2 ist das Konkavgitter ebenfalls mit (14) bezeichnet. Es hat auf seiner Rückseite einen Zapfen (14a), mit dem es vom Manipulator gehalten wird. Die äußere Umrandung (14b) des Konkavgitters (14) sitzt mit einer schmalen Fuge (22) in einem zylinderförmigen Ausschnitt der Montageplatte (23). Diese Montageplatte ist auf der Auflagefläche (25) des Chassis (11) frei verschiebbar und erlaubt daher eine praktisch beliebig große Verschiebung des Konkavgitters (14) in x-und y-Richtung. Innerhalb des zylinderförmigen Ausschnittes in der Montageplatte (23) ist das Konkavgitter (14) in z-Richtung verschiebbar. Es ist außerdem beliebig um die z-Richtung drehbar und kann - je nach Breite des Spaltes (22) - auch mehr oder weniger um die x-und y-Richtung gedreht werden.

Die Fuge (22) zwischen Konkavgitter (14) und der Montageplatte (23) sowie die Zwischenschicht (24) zwischen der Montageplatte (23) und der Auflagefläche (25) wird mit der sich verfestigenden Substanz ausgefüllt. Dies kann vor der Justierung erfolgen, wenn sichergestellt ist, daß der Justiervorgang abgeschlossen ist, bevor der Verfestigungsvorgang beginnt. Andernfalls wird die Montageplatte (23) mit der geeigneten Menge der sich verfestigenden Substanz über die äußere Umrandung (14b) geschoben und auf die Auflagefläche (25) gedrückt, wenn die Justierung des Konkavgitters (14) erfolgt ist. Durch geeignete Dimensionierung des zylinderförmigen Ausschnittes in der Montageplatte (23) und durch Verwendung von geeigneten Mengen der sich verfestigenden Substanz kann deren Volumen bzw. Schichtdicke auf einen optimalen Wert gebracht werden.

Besonders günstig ist es, der äußeren Umrandung (14b) des Konkavgitters auch noch eine Krümmung in z-Richtung zu geben, so daß die äußere Umrandung ein Kugelausschnitt wird, dessen Mittelpunkt auch in z-Richtung in der Mitte des Konkavgitters (14) liegt. In diesem Fall sind relativ große Drehungen des Konkavgitters (14) um die y-und die x-Achse möglich, ohne daß die Abmessungen der Fuge verändert werden.

In Figur 3 ist die Montage der Diodenzeile dargestellt, die auf die Trägerplatte (31) unterhalb der Zeichenebene aufgeklebt ist. Die (nicht gezeichneten) Anschlußstifte der Diodenzeile gehen durch zwei Schlitze (32), so daß der zweckmäßigerweise möglichst nahe an der Diodenzeile anzuordnende erste Teil der Elektronik oberhalb der Zeichenebene angeordnet wird. Für die Montage der hierfür notwendigen Leiterplatte sind in der Trägerplate (31) zwei Gewindebuchsen (33) eingeklebt, in welche Stehbolzen eingeschraubt werden, die zugleich auch für die Befestigung der Trägerplatte (31) am Manipulator während der Justage und Fixierung dienen.

Die Trägerplatte (31) hat Montageflächen (31a), auf welche nach der Justage mit dünnen Zwischenschichten (35) aus der sich verfestigenden Substanz Montagequader (36) aufgesetzt werden. Dabei werden die Montagequader (36) zugleich mit dünnen Zwischenschichten (37) aus der sich verfestigenden Substanz auch auf die Auflagefläche (38) des Chassis (11) aufgesetzt. Die Trägerplatte (31) liegt also nicht auf der Auflagefläche (38) auf, sondern hat einen Abstand von ihr, so daß sie nicht nur in den x-und y-Richtungen verschoben und um die z-Richtung gedreht, sondern auch in der z-Richtung verschoben und um die x-Richtung gedreht werden kann. Auf diese Weise ist eine optimale Justierung auch auf verschiedene Bereiche des von dem Konkavgitter (14) erzeugten Spektrums möglich.

Mit der in Figur 3 gezeigten Anordnung kann die Diodenzeile lediglich nicht um die y-Richtung gedreht werden, was in dem beschriebenen Ausführungsbeispiel auch nicht notwendig ist. Für andere Anwendungsfälle, bei denen auch eine Drehung um die y-Richtung notwendig ist, zeigt Figur 4 ein Ausführungsbeispiel für ein optisches Bauteil (41), z.B. einen Spiegel, der in allen drei Raumrichtungen verschiebbar und um alle drei Raumrichtungen drehbar ist. Das über den Zapfen (42) mit dem Manipulator verbundene optische Bauteil (41) hat zwei Montageflächen (41a), auf welche nach der Justierung mit dünnen Zwischenschichten (43) aus der sich verfestigenden Substanz erste Montagequader (44) aufgesetzt werden. Auf die Stirnflächen dieser ersten Montagequader (44) werden mit dünnen Zwischenschichten (45) aus der sich verfestigenden Substanz zweite Montagequader (46) aufgesetzt, die zugleich mit dünnen Zwischenschichten (47) aus der sich verfestigenden Substanz auf die Auflagefläche (48) aufgesetzt werden.

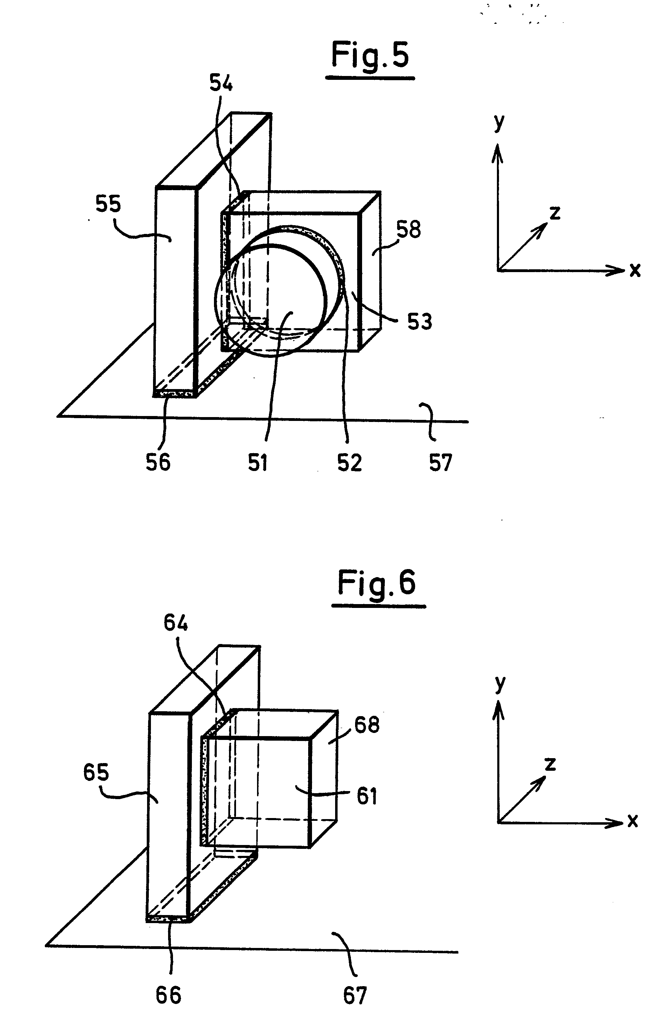

In den Figuren 5 und 6 sind zwei weitere Ausführungsbeispiele für die Montage justierter optischer Bauelemente dargestellt. Das optische Bauteil (51) der Figur 5 kann z.B. ein Reflexionsgitter sein, dessen rückseitige Fläche als Montagefläche verwendet wird. Es wird an seiner zylinderförmigen Begrenzungsfläche von einem Manipulator gehalten. Nach erfolgter Justage wird auf die Montagefläche mit einer dünnen Zwischenschicht (52) aus der sich verfestigenden Substanz eine erste quaderförmige Montageplatte (53) aufgesetzt. Auf eine Seitenfläche der ersten Montageplatte (53) wird mit einer dünnen Zwischenschicht (54) aus der sich verfestigenden Substanz eine zweite quaderförmige Montageplatte (55) aufgesetzt, die zugleich mit einer Seitenfläche mit einer dünnen Zwischenschicht (56) aus der sich verfestigenden Substanz auf die Grundplatte (57) aufgesetzt wird. Zur Erhöhung der Stabilität kann auf die Seitenfläche (58) der ersten Montageplatte (53) mit einer dünnen Zwischenschicht aus der sich verfestigenden Substanz eine (nicht gezeichnete) dritte Montageplatte aufgesetzt werden, die zugleich mit einer Seitenfläche mit einer Zwischenschicht aus der sich verfestigenden Substanz auf die Grundplatte (57) aufgesetzt wird.

Bei dem in Figur 5 dargestellten Ausführungsbeispiel kann das optische Bauelement (51) während der Justage in allen drei Raumrichtungen x, y und z bewegt werden und um alle drei Raumrichtungen gedreht werden. Eine Drehung um die z-Richtung ist in vielen Fällen nicht erforderlich, z.B. bei Planspiegeln. Für diesen Fall ist in der Figur 6 eine einfachere Ausführungsform dargestellt, bei dem eine Seitenfläche des optischen Bauelementes (61) als Montagefläche dient. An diese Seitenfläche wird nach der Justage mit einer dünnen Zwischenschicht (64) aus der sich verfestigenden Substanz die quaderförmige Montageplatte (65) angesetzt, die zugleich mit einer Seitenfläche mit einer dunnen Zwischenschicht (66) aus der sich verfestigenden Substanz auf die Grundplatte (67) aufgesetzt wird. Auch in diesem Fall kann zur Erhöhung der Stabilität auf die Seitenfläche (68) des optischen Bauteiles (61) mit einer dünnen Zwischenschicht aus der sich verfestigenden Substanz eine weitere (nicht gezeichnete) Montageplatte angesetzt werden, die zugleich mit einer Seitenfläche mit einer dünnen Zwischenschicht aus der sich verfestigenden Substanz auf die Grundplatte (67) aufgesetzt wird.

Selbstverständlich müssen die optischen Bauteile nicht direkt mit den Montagequadern bzw. Montageplatte durch die sich verfestigende Substanz verbunden werden, sondern sie können in allen Ausführungsbeispielen auch zunächst in Fassungen eingesetzt bzw. auf Trägerplatten montiert werden, wobei dann die Fassungen bzw. Trägerplatten mit den Montagequadern bzw. Montageplatten durch die sich verfestigende Substanz verbunden werden.

Es ist besonders vorteilhaft, als Material für die Fassungen, Trägerplatten (31), Montagequader (36, 44, 46), Montageplatte (23, 53, 55, 65) und/oder Auflageflächen (25, 38, 48, 57, 67) bzw. Chassis (11) verdichtete Keramik zu verwenden, wobei deren Zusammensetzung so gewählt wird, daß ihr thermischer Ausdehnungskoeffizient gleich oder annähernd gleich demjenigen des Glases ist, aus dem die optischen Bauteile hergestellt sind. Als Material für die sich verfestigende Substanz kann in diesem Fall z.B. UHU plus (R) endfest verwendet werden, das vorzugsweise in einer Schichtdicke von etwa 0,1 mm verarbeitet wird.

Es ist auch möglich, als Material für die Fassungen, Trägerplatten, Montagequader, Montageplatten und/oder Auflageflächen bzw. Chassis Glas zu verwenden.

Das mit den obigen Ausführungsbeispielen erläuterte Verfahren läßt sich bei allen optischen Geräten anwenden, die aus mindestens zwei optischen Bauelementen bestehen, welche zueinander justiert werden.

**Ansprüche**

1. Verfahren zur justierten Montage eines optischen Bauteiles in einem mechanischen Bauteil oder Chassis, bei dem das justierte optische Bauteil oder seine Fassung bzw. Trägerplatte mit dem mechanischen Bauteil oder dem Chassis nur über eine Justiervorrichtung verbunden ist und durch eine sich verfestigende Substanz an dem mechanischen Bauteil oder Chassis dauerhaft fixiert wird, wonach die Justiervorrichtung entfernt wird, dadurch gekennzeichnet, daß die Fixierung durch die sich verfestigende Substanz auf mindestens zwei voneinander unabhängige Fixierungen (22, 24; 35, 37; 43, 45, 47; 52, 54, 56; 64, 66) aufgeteilt wird und daß die für die Fixierungen verwendeten Teile (23, 31, 36, 44, 46, 53, 55, 65) derart ausgebildet und dimensioniert werden, daß sich für die sich verfestigende Substanz optimale Volumina bzw. Schichtdicken ergeben.

2. Anordnung zur Durchführung des Verfahrens nach Anspruch 1, dadurch gekennzeichnet, daß ein optisches Bauteil (14), welches entweder selbst oder dessen Fassung bzw. Trägerplatte einen runden Querschnitt hat, in einem zylinderförmigen Ausschnitt einer Montageplatte (23) mit einer Fuge (22) für die sich verfestigende Substanz angeordnet ist und daß die Montageplatte (23) auf einer Auflagefläche (25) oder einem Chassis mit einer Zwischenschicht (24) aus der sich verfestigenden Substanz angeordnet ist.

3. Anordnung nach Anspruch 2, dadurch gekennzeichnet, daß das optische Bauteil (14) oder die Fassung bzw. Trägerplatte an seiner äußeren Umrandung (14b) mit einer kugelförmigen Oberfläche ausgebildet ist, deren Radius gleich dem Radius des zylinderförmigen Ausschnittes in der Montageplatte (23) vermindert um die Dicke der Fuge (22) für die sich verfestigende Substanz ist.

4. Anordnung zur Durchführung des Verfahrens nach Anspruch 1, dadurch gekennzeichnet, daß ein optisches Bauteil, welches entweder selbst oder dessen Fassung bzw. Trägerplatte (31) zwei vorzugsweise parallel zueinander angeordnete Montageflächen (31a) hat, zwischen zwei Montagequadern (36) mit dünnen Zwischenschichten (35) aus der sich verfestigenden Substanz angeordnet ist und daß die Montagequader (36) auf einer Auflagefläche (38) bzw. einem Chassis mit dünnen Zwischenschichten (37) aus der sich verfestigenden Substanz angeordnet sind.

5. Anordnung zur Durchführung des Verfahrens nach Anspruch 1, dadurch gekennzeichnet, daß ein optisches Bauteil (41), welches entweder selbst oder dessen Fassung bzw. Trägerplatte zwei vorzugsweise parallel zueinander angeordnete Montageflächen (41a) hat, zwischen zwei ersten Montagequadern (44) mit dünnen Zwischenschichten (43) aus der sich verfestigenden Substanz angeordnet ist, daß die Stirnflächen der ersten Montagequader (44) zwischen zwei zweiten Montagequadern (46) mit dünnen Zwischenschichten (45) aus der sich verfestigenden Substanz angeordnet sind und daß die zweiten Montagequader (46) auf einer Auflagefläche (48) bzw. einem Chassis mit dünnen Zwischenschichten (47) aus der sich verfestigenden Substanz angeordnet sind.

6. Anordnung zur Durchführung des Verfahrens nach Anspruch 1, dadurch gekennzeichnet, daß ein optisches Bauteil (51), welches entweder selbst oder dessen Fassung bzw. Trägerplatte eine rückseitige Montagefläche hat, auf einer ersten quaderförmigen Montageplatte (53) mit einer dünnen Zwischenschicht (52) aus der sich verfestigenden Substanz angeordnet ist, daß die erste Montageplatte (53) mit einer Seitenfläche auf einer zweiten quaderförmigen Montageplatte (55) mit einer dünnen Zwischenschicht (54) aus der sich verfestigenden Substanz angeordnet ist und daß die zweite Montageplatte (55) mit einer Seitenfläche auf einer Grundplatte (57) oder einem Chassis mit einer dünnen Zwischenschicht (56) aus der sich verfestigenden Substanz angeordnet ist.

7. Anordnung zur Durchführung des Verfahrens nach Anspruch 1, dadurch gekennzeichnet, daß ein optisches Bauteil (61), welches entweder selbst oder dessen Fassung bzw. Trägerplatte eine seitliche Montagefläche hat, auf einer quaderförmigen Montageplatte (65) mit einer dünnen Zwischenschicht (64) aus der sich verfestigenden Substanz angeordnet ist und daß die Montageplatte (65) mit einer Seitenfläche auf einer Grundplatte (67) oder einem Chassis mit einer dünnen Zwischenschicht (66) aus der sich verfestigenden Substanz angeordnet ist.

8. Anordnung nach einem der Ansprüche 2 bis 7, dadurch gekennzeichnet, daß als Material für Fassungen, Trägerplatten (31), Montagequader (36, 44, 46), Montageplatten (53, 55, 65) und/oder Auflagefläche (25, 38, 48, 57, 67) bzw. Chassis (11) verdichtete Keramik vorgesehen ist, deren Zusammensetzung so gewählt ist, daß ihr thermischer Ausdehnungskoeffizient gleich oder annähernd gleich demjenigen des Glases ist, aus dem die optischen Bauteile hergestellt sind.

9. Anordnung nach einem der Ansprüche 2 bis 8, dadurch gekennzeichnet, daß als sich verfestigende Substanz für die Fuge (22) und die Zwischenschichten (35, 37, 43, 45, 47, 52, 54, 56, 64, 66) UHU plus [(R)] endfest vorgesehen ist und die Schichtdicke vorzugsweise etwa 0,1 mm beträgt.

10. Anordnung nach einem der Ansprüche 2 bis 7, dadurch gekennzeichnet, daß als Material für Fassungen, Trägerplatten (31), Montagequader (36, 44, 46), Montageplatten (53, 55, 65) und/oder Auflagefläche (25, 38, 48, 57, 67) bzw. Chassis (11) Glas vorgesehen ist.

Fig.1

Fig.2

Fig.3

Fig.4

## Fig.5

54

55

58

53

56    51    52    57

y

z

x

## Fig.6

64

65

68

61

66    67

y

z

x